# EUROPÄISCHE PATENTSCHRIFT

(11) **EP 1 360 754 B1**
(45) Veröffentlichungstag und Bekanntmachung des Hinweises auf die Patenterteilung: **21.11.2012**
(21) Anmeldenummer: 02706654.7
(22) Anmeldetag: 30.01.2002
(51) Int. Cl.: H02K 55/04

(54) **MASCHINE MIT EINER IN EINEM WICKLUNGSTRÄGER ANGEORDNETEN SUPRALEITENDEN WICKLUNG SOWIE MIT MITTELN ZUR HALTERUNG DES WICKLUNGSTRÄGERS**
MACHINE WITH A SUPERCONDUCTING WINDING ARRANGED IN A WINDING CARRIER AND MEANS FOR HOLDING SAID WINDING CARRIER
MACHINE COMPORTANT UN ENROULEMENT SUPRACONDUCTEUR PLACE DANS UN SUPPORT D'ENROULEMENT ET DES MOYENS POUR MAINTENIR LE SUPPORT D'ENROULEMENT

(30) Priorität: 13.02.2001 DE 10106552
(43) Veröffentlichungstag der Anmeldung: 12.11.2003
(73) Patentinhaber: SIEMENS AKTIENGESELLSCHAFT, 80333 München (DE)
(72) Erfinder: FRANK, Michael, 91080 Uttenreuth (DE)
(86) Internationale Anmeldenummer: PCT/DE2002/000325
(87) Internationale Veröffentlichungsnummer: WO 2002/065625

(56) Entgegenhaltungen:
- DE-A- 2 325 707
- DE-A- 2 326 016
- DE-A- 2 753 461
- US-A- 4 532 445

## Beschreibung

Die Erfindung bezieht sich auf eine Maschine mit einem um eine Rotationsachse drehbar gelagerten Rotor, der ein warmes Rotoraußengehäuse hat, das an axialen Rotorwellenteilen befestigt ist und einen kalten Wicklungsträger mit einer supraleitenden Wicklung umschließt. Der Rotor weist ferner Mittel zur Halterung des Wicklungsträgers innerhalb des Rotoraußengehäuses auf, die auf einer Seite des Rotors zur Übertragung eines Drehmomentes zwischen dem Wicklungsträger und dem zugeordneten Rotorwellenteil ausgelegt sind. Ferner sind Mittel zur Kühlung und thermischen Isolation der supraleitenden Wicklung vorgesehen. Eine entsprechende Maschine geht aus der DE 23 26 016 B2 hervor.

Elektrische Maschinen, insbesondere Generatoren oder Motoren, besitzen in der Regel eine rotierende Feldwicklung und eine feststehende Ständerwicklung. Durch die Verwendung von tiefgekühlten und insbesondere supraleitenden Leitern kann man dabei die Stromdichte und dadurch die spezifische Leistung der Maschine, d.h. die Leistung pro Kilogramm Eigengewicht, erhöhen und auch den Wirkungsgrad der Maschine steigern.

Tiefkalte Wicklungen elektrischer Maschinen müssen im allgemeinen von der Umgebung thermisch isoliert und mit einem Kühlmittel auf der geforderten Tieftemperatur gehalten werden. Eine effektive Wärmeisolation kann dabei nur erreicht werden, wenn die tiefkalten Teile der Maschine von dem warmen Außenraum möglichst durch ein Hochvakuum mit einem Restgasdruck im allgemeinen unter 10⁻³ mbar getrennt sind und wenn Verbindungsteile zwischen diesen tiefkalten Teilen und dem warmen Außenraum möglichst wenig Wärme übertragen.

Für eine Vakuumisolation von Rotoren mit tiefzukühlenden Läuferwicklungen und warmen Ständerwicklungen sind insbesondere zwei Varianten bekannt: Bei einer ersten Ausführungsform hat der Rotor ein warmes Außengehäuse und einen mitrotierenden abgeschlossenen Vakuumraum. Der Vakuumraum sollte dabei den tiefkalten Bereich allseitig umgeben (vgl. z.B. "Siemens Forsch. u. Entwickl.-Ber.", Bd. 5, 1976, No. 1, Seiten 10 bis 16). Über sich durch den Vakuumraum erstreckende Abstützungen erfolgt jedoch eine unerwünschte Übertragung von Wärme auf die tiefkalten Teile. Bei einer zweiten Ausführungsform rotiert der im wesentlichen kalte Rotor in einem Hochvakuum. Dabei wird die äußere Begrenzung des Hochvakuumraumes durch die Innenbohrung des Ständers festgelegt. Eine solche Anordnung erfordert jedoch hochvakuumdichte Wellendichtungen zwischen dem Rotor und dem Ständer (vgl. z.B. DE 27 53 461 A1).

Bei der aus der eingangs genannten DE-B2-Schrift entnehmbaren Maschine ist die erstgenannte Ausführungsform realisiert. Bei ihrem Rotor befindet sich die supraleitende Wicklung im Inneren eines Läuferkryostaten, der mit angebrachten Flanschwellen ein Außengehäuse des Rotors bildet. Auf Grund einer Verwendung von klassischem Supraleitermaterial für die Leiter der Wicklung ist eine Heliumkühlung vorgesehen mit einer Betriebstemperatur um etwa 4 K. Demgegenüber befindet sich die Außenkontur des Rotoraußengehäuses etwa auf Raumtemperatur und im Betrieb auch gegebenenfalls darüber. Das Nutzdrehmoment der Maschine wird in der Rotorwicklung erzeugt. Diese ist in einem kalten Wicklungsträger angeordnet, der seinerseits isoliert in dem als Kryostaten wirkenden Rotoraußengehäuse aufgehängt bzw. gehaltert ist. Dabei muss diese Aufhängung bzw. Halterung auf der Antriebsseite des Rotors stabil genug sein, um das Drehmoment von dem kalten Wicklungsträger auf einen antriebsseitigen Wellenteil zu übertragen. Eine entsprechende, starre Verbindungseinrichtung zur Drehmomentübertragung muss daher verhältnismäßig massiv ausgeführt und kraftschlüssig mit dem Wicklungsträger und dem antriebsseitigen Wellenteil verbunden werden. Zugleich übernimmt diese Verbindungseinrichtung die antriebsseitige Zentrierung des kalten Wicklungsträgers. Auf der gegenüberliegenden Rotorseite, die auch als Nichtantriebs- oder Betriebsseite bezeichnet wird, weil an ihr für einen Betrieb der Maschine wichtige Verbindungen wie z.B. eine Kühlmittelzufuhr vorgesehen sind, wird praktisch kein Drehmoment ausgeleitet. Daher sind hier im wesentlichen nur die Funktionen einer Zentrierung und thermischen Isolierung zu erfüllen. Da sich jedoch bei einem Übergang von Raumtemperatur auf die Betriebstemperatur die axiale Länge des Wicklungsträgers relativ zur entsprechenden Ausdehnung des Rotoraußengehäuses um mindestens einen Millimeter reduziert, muss die betriebsseitige Aufhängung zusätzlich die Funktion eines entsprechenden Längenausgleichs gewährleisten. Bei der aus der eingangs genannten DE-B2-Schrift entnehmbaren Maschine sind deshalb zwischen dem Rotoraußengehäuse und dem Wicklungsträger radial verlaufende, scheibenförmige Verbindungselemente vorgesehen, die zum Dehnungsausgleich eine entsprechende Verbiegung in axialer Richtung ermöglichen. Auch über diese Verbindungselemente erfolgt eine Wärmeeinleitung in den Kryobereich des Wicklungsträgers.

Bei einem weiteren, aus der DE 27 17 580 A1 entnehmbaren Rotor einer elektrischen Maschine mit supraleitender Erregerwicklung ist ein entsprechendes, sich radial erstreckendes Verbindungselement zwischen einem Rotoraußengehäuse und einem Wicklungsträger vorgesehen, das zwar eine axiale Deformation zulässt, jedoch zu unerwünschter Wärmeeinleitung in den Kryobereich der Maschine führt.

Neben den seit langem bekannten metallischen Supraleitermaterialien wie z.B. NbTi oder Nb₃Sn, wie sie bei den vorstehend erwähnten Maschinen eingesetzt werden, sind seit 1987 auch metalloxidische Supraleitermaterialien mit Sprungtemperaturen von über 77 K bekannt. Mit Leitern unter Verwendung solcher Hoch(High)-T_{c}-Supraleitermaterialien, die auch als HTS-Materialien bezeichnet werden, versucht man, supraleitende Wicklungen von Maschinen zu erstellen. Auch Maschinen mit diesem Leitertyp erfordern auf Grund der Temperaturunterschiede zwischen der Betriebstemperatur des Supraleitermaterials und der Außentemperatur des wärmeren Rotoraußengehäuses einen entsprechenden Dehnungsausgleich in axialer Richtung.

Aufgabe der vorliegenden Erfindung ist es, für eine Maschine mit den eingangs genannten Merkmalen Halterungsmittel für deren Wicklungsträger anzugeben, die auf verhältnismäßig einfache Weise einen solchen axialen Dehnungsausgleich (=Längenausgleich) des Wicklungsträgers ermöglichen und dabei insbesondere Wärmeeinleitungsverluste der supraleitenden Wicklung begrenzt halten.

Diese Aufgabe wird erfindungsgemäß mit den Merkmalen des Anspruchs 1 gelöst. Dementsprechend soll bei einer Maschine mit den eingangs genannten Merkmalen vorgesehen sein, dass deren Halterungsmittel auf der drehmomentübertragenden Seite des Rotors als einseitige, sich axial (= in Richtung parallel zur Rotorachse bzw. achsenparallel) erstreckende Befestigungsvorrichtung des Wicklungsträgers innerhalb des Rotoraußengehäuses ausgebildet sind. Unter einer Befestigungsvorrichtung werden in diesem Zusammenhang Halterungsmittel verstanden, die sowohl eine mechanisch stabile Halterung und Zentrierung des Wicklungsträgers innerhalb des Rotoraußengehäuses als auch eine Drehmomentübertragung nicht nur im normalen Betriebsfall sondern auch bei Überlast mit vergleichsweise höheren Momenten z.B. beim Anlaufen oder bei verschiedenen Störfällen der Maschine gewährleisten.

Die mit dieser Ausgestaltung der Maschine verbundenen Vorteile bestehen in einer einfachen, billigen Fertigbarkeit, der Zentrierung und der gleichzeitig begrenzt zu haltenden Wärmelecks. Dabei sind besondere Maßnahmen zu einem Schrumpfungsausgleich (= axiale Bewegung) des Wicklungsträgers nicht mehr erforderlich. Der Erfindung liegt nämlich die Erkenntnis zugrunde, dass für die Maschine bei Verzicht auf eine beidseitige Aufhängung wie beim Stand der Technik eine Schrumpfungsproblematik umgangen werden kann. Durch die einseitige Aufhängung (im Sinne einer starren Befestigung unabhängig von der Ausrichtung der Rotorachse) entstehen nämlich durch den thermischen Schrumpf des Wicklungsträgers keine Spannungen zwischen kälteren Innen- und wärmeren Außenteilen des Rotors. Die verbleibende, einseitige Aufhängung muss selbstverständlich mechanisch entsprechend stark ausgelegt sein. Dies ist für Motoren und Generatoren im Allgemeinen jedoch kein Problem. Da nämlich durch diese Aufhängung das Drehmoment der Maschine übertragen werden muss, ist eine hierfür hinreichend massive Auslegung der Befestigungsvorrichtung auf der Antriebsseite der Maschine von vornherein vorhanden.

Vorteilhafte Ausgestaltungen der erfindungsgemäßen Maschine gehen aus den abhängigen Ansprüchen hervor.

So kann die sich axial erstreckende Befestigungsvorrichtung hohlzylinderförmig gestaltet sein. Eine gute Zentrierung des Wicklungsträgers über diese Vorrichtung bei gleichzeitig geringem, die Wärmeeinleitungsverluste begrenzenden Materialquerschnitt lässt sich so erreichen.

Vorzugsweise besteht zumindest ein Teil der sich axial erstreckenden Befestigungsvorrichtung aus einem mit Fasern verstärkten Kunststoffmaterial. Mit entsprechenden Materialien ist eine hinreichende mechanische Stabilität bei vorteilhaft geringer Wärmeübertragung zu gewährleisten.

Für die Leiter der supraleitenden Wicklung der Maschine kommt metallisches Niedrig-T_{c}-Supraleitermaterial oder insbesondere metalloxidisches Hoch-T_{c}-Supraleitermaterial in Frage.

Üblicherweise erstreckt sich die Rotationsachse der erfindungsgemäßen Maschine in horizontaler Richtung. Gegebenenfalls kann jedoch auch, insbesondere im Hinblick auf eventuelle Unwuchtprobleme, eine Anordnung der Maschine mit vertikaler Ausrichtung der Rotationsachse ihres Rotors vorgesehen werden.

Weitere vorteilhafte Ausgestaltungen der erfindungsgemäßen Maschine sind Gegenstand der restlichen Unteransprüchen.

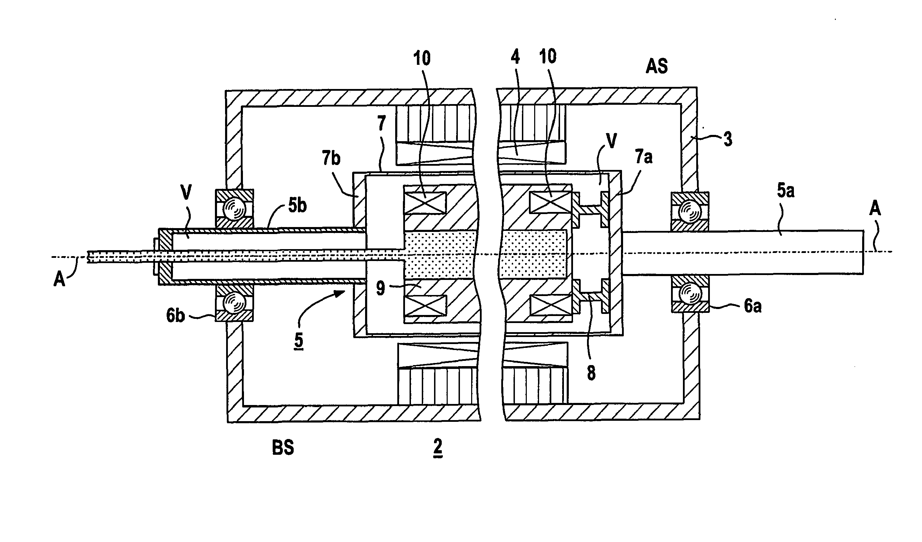

Ein bevorzugtes Ausführungsbeispiel einer Maschine nach der Erfindung wird nachfolgend an Hand der Zeichnung noch weiter erläutert. Dabei zeigt schematisch im Längsschnitt deren einzige Figur eine mögliche Ausführungsform der Maschine.

Bei der nachfolgend angedeuteten Maschine kann es sich insbesondere um einen Synchron-Motor oder einen Generator handeln. Selbstverständlich sind auch andere Anwendungs- bzw. Einsatzgebiete entsprechender Maschinen wie für hohe Drehzahlen, kompakte Antriebe z.B. von Schiffen oder für sogenannte Offshore-Einrichtungen wie z.B. Bohrplattformen möglich. Die erfindungsgemäße Maschine umfasst eine rotierende, supraleitende Wicklung, die prinzipiell eine Verwendung von metallischem LTS-Material (Niedrig-T_{c}-Supraleitermaterial) oder insbesondere oxidischem HTS-Material (Hoch-T_{c}-Supraleitermaterial) gestattet. Letzteres Material sei für das nachfolgende Ausführungsbeispiel ausgewählt. Die Wicklung kann aus einer Spule oder einem System von Spulen in einer zwei-, vier- oder sonstigen mehrpoligen Anordnung bestehen. Der prinzipielle Aufbau einer solchen Synchronmaschine geht aus der Figur hervor, wobei von bekannten Ausführungsformen solcher Maschinen ausgegangen wird (vgl. z.B. den vorstehend genannten Stand der Technik).

Die allgemein mit 2 bezeichnete Maschine umfasst ein feststehendes, auf Raumtemperatur befindliches Maschinenaußengehäuse 3 mit einer Ständerwicklung 4 darin. Innerhalb dieses Außengehäuses und von der Ständerwicklung 4 umschlossen ist ein Rotor 5 drehbar um eine Rotationsachse A in Lagern 6a und 6b gelagert. Hierzu weist der Rotor ein als Vakuumgefäß gestaltetes Rotoraußengehäuse 7 auf, in dem ein Wicklungsträger 9 mit einer HTS-Wicklung 10 erfindungsgemäß einseitig gehaltert ist. Hierzu dient auf der Antriebsseite AS eine starre, rohrförmige Befestigungsvorrichtung 8 zwischen dem Wicklungsträger 9 und einem scheibenförmigen, mit dem Rotorwellenteil 5a fest verbundenen scheibenförmigen Seitenteil 7a des Rotoraußengehäuses. Über diese starre, sich axial (d.h. parallel zu Rotationsachse A) erstreckende Befestigungsvorrichtung 8 erfolgt auch die Drehmomentübertragung. Im Wesentlichen besteht diese Befestigungsvorrichtung vorteilhaft aus einem schlechtwärmeleitenden Hohlzylinder. Im Wesentlichen besteht diese Befestigungseinrichtung vorteilhaft aus einem schlecht-wärmeleitenden Hohlzylinder, der aus einem mit Fasern wie beispielweise mit Glasfasern verstärkten Kunststoffmaterial (sogenanntes "GFK"-Material) oder aus einem anderen faserverstärkten Material besteht. Dabei sind in an sich bekannter Weise die Fasern in das für sie als Matrix dienende, unter Festigkeitsgesichtspunkten ausgewählte Kunststoffmaterial gelegt. Dieses Verbundmaterial gewährleistet dann eine für die Drehmomentübertragung hinreichend große mechanische Steifigkeit und großen Schubmodul (G-Modul) bei gleichzeitig geringer Wärmeleitfähigkeit.

Auf der der Antriebsseite AS gegenüberliegenden, nachfolgend mit BS bezeichneten Nichtantriebsseite ist erfindungsgemäß keine entsprechende Befestigungsvorrichtung vorgesehen. D.h., die Halterung und Zentrierung des Wicklungsträgers 9 erfolgt ausschließlich mittels der Befestigungsvorrichtung 8.

Selbstverständlich können auf der antriebsabgewandten Seite BS Verbindungselemente zwischen dem Wicklungsträger 9 und dem Rotoraußengehäuse 7 bzw. dessen Gehäusewand 7b vorhanden sein. Diese Verbindungselemente tragen jedoch praktisch nicht zur Halterung und Zentrierung des Wicklungsträgers bei, sondern sind beispielsweise für die elektrische und/oder kühltechnische Verbindung der supraleitenden Wicklung vorgesehen. Eine entsprechende kühltechnische Verbindung ist in der Figur angedeutet. Dementsprechend erfolgt auf der antriebsabgewandten Seite BS über den hohlzylindrisch ausgebildeten, in dem Lager 6b gelagerten Wellenteil 5b unter anderem eine Kühlmittelzufuhr zur Kühlung der supraleitenden Wicklung 10 von außerhalb der Maschine. Einzelheiten der Kühlmittelzufuhr und der Abdichtung sind allgemein bekannt. Auf eine detaillierte Darstellung wurde deshalb in der Figur verzichtet. Selbstverständlich ist es auch möglich, eine entsprechende Kühlmittelzufuhr in den antriebsseitigen Wellenteil 5a zu integrieren.

Ein aus Gründen einer thermischen Isolation den Wicklungsträger 9 mit der supraleitenden Wicklung 10 umschließendes Vakuum in mindestens einem Vakuumraum ist in der Figur mit V bezeichnet. Selbstverständlich können noch weitere thermisch isolierende Maßnahmen wie insbesondere Superisolation vorgesehen sein.

Abweichend von der in der Figur dargestellten Ausführungsform der Befestigungsvorrichtung 8 in Form eines Hohlzylinders kann diese Vorrichtung selbstverständlich auch mehrstückig ausgebildet sein. So können entsprechende Elemente z.B. als mehrere sich konzentrisch umschließende Rohre ausgebildet sein.

Darüber hinaus braucht die Maschine nach der Erfindung auch nicht, wie in der Figur dargestellt, so angeordnet zu sein, dass ihre Rotationsachse A horizontal verläuft. Vielmehr kann es unter dem Gesichtspunkt eventueller Unwuchtprobleme vorteilhaft sein, wenn ihre Rotationsachse A in vertikaler Richtung ausgerichtet ist. Der Wicklungsträger 9 würde dann mittels der Befestigungsvorrichtung 8 innerhalb des Rotoraußengehäuses 7 und damit an dem Wellenteil 5a aufgehängt sein.

## Patentansprüche

1. Maschine
• mit einem um eine Rotationsachse (A) drehbar gelagerten Rotor (5), der
a) ein warmes Rotoraußengehäuse (7) hat, das an axialen Rotorwellenteilen (5a,5b) befestigt ist und einen kalten Wicklungsträger (9) mit einer supraleitenden Wicklung (10) umschließt, und
b) Mittel zur Halterung des Wicklungsträgers (9) innerhalb des Rotoraußengehäuses (7) aufweist, die auf einer Seite (AS) des Rotors (5) zur Übertragung eines Drehmomentes zwischen dem Wicklungsträger (9) und dem zugeordneten Rotorwellenteil (5a) ausgelegt sind
sowie
• mit Mitteln zur Kühlung und thermischen Isolation der supraleitenden Wicklung (10),
**dadurch gekennzeichnet, dass** die Halterungsmittel auf der drehmomentübertragenden Seite (AS) des Rotors (5) als einseitige, sich in axialer Richtung erstreckende Befestigungsvorrichtung (8) des Wicklungsträgers (9) innerhalb des Rotoraußengehäuses (7) ausgebildet sind.

2. Maschine nach Anspruch 1, **dadurch gekennzeichnet, dass** die sich axial erstreckende Befestigungsvorrichtung (8) hohlzylinderförmig gestaltet ist.

3. Maschine nach Anspruch 1 oder 2, **dadurch gekennzeichnet , dass** die sich axial erstreckende Befestigungsvorrichtung (8) mehrere, vorzugsweise sich konzentrisch bezüglich der Rotorachse (A) umschließende Elemente umfasst.

4. Maschine nach einem der vorangehenden Ansprüche, **da** - **durch gekennzeichnet**, dass zumindest ein Teil der sich axial erstreckenden Befestigungsvorrichtung (8) aus einem mit Fasern verstärkten Kunststoffmaterial besteht.

5. Maschine nach einem der vorangehenden Ansprüche, **da** - **durch gekennzeichnet**, dass die Leiter der supraleitenden Wicklung (10) metallisches Niedrig-T_{c}-Supraleitermaterial oder metalloxidisches Hoch-T_{c}-Supraleitermaterial enthalten.

6. Maschine nach einem der vorangehenden Ansprüche, **da** - **durch gekennzeichnet**, dass zumindest zwischen dem Rotoraußengehäuse (7) und dem Wicklungsträger (9) ein Vakuumraum (V) vorhanden ist 7. Maschine nach einem der vorangehenden Ansprüche, **ge** - **kennzeichnet durch** eine Anordnung mit vertikaler Ausrichtung der Rotationsachse (A) des Rotors (5).

## Claims

1. Machine
• having a rotor (5) which is mounted such that it can rotate about a rotation axis (A), and which
a) has a hot rotor outer housing (7) which is attached to axial rotor shaft parts (5a, 5b) and has a superconducting winding (10) which surrounds a cold winding former (9)
and
b) has a means for holding the winding former (9) within the rotor outer housing (7), which means is formed at one end(AS) of the rotor (5) in order to transmit a torque between the winding former (9) and the associated rotor shaft part (5a),
as well as
• having a means for cooling and thermal insulation of the superconducting winding (10),
**characterized in that** the holding means is formed on that end (AS) of the rotor (5) which transmits torque as a single-ended attachment apparatus (8), which extends in the axial direction, of the winding former (9) within the rotor outer housing (7).

2. Machine according to Claim 1, **characterized in that** the axially extending attachment apparatus (8) has a hollow cylindrical shape.

3. Machine according to Claim 1 or 2, **characterized in that** the axially extending attachment apparatus (8) has two or more elements, which preferably enclose the rotor axis (8), concentrically with respect to it.

4. Machine according to one of the preceding claims, **characterized in that** at least a part of the axially extending attachment apparatus (8) is formed from a plastic material which is reinforced with fibers.

5. Machine according to one of the preceding claims, **characterized in that** the conductors of the superconducting winding (10) contain metallic low-T_{c} superconductor material or metal-oxide high-T_{c} superconductor material.

6. Machine according to one of the preceding claims, **characterized in that** a vacuum area (V) is provided between the rotor outer housing (7) and the winding former (9).

7. Machine according to one of the preceding claims, **characterized by** an arrangement with the rotation axis (A) of the rotor (5) aligned vertically.

## Revendications

1. Machine
• comprenant un rotor ( 5 ) monté tournant autour d'un axe ( A ) de rotation, qui
a) a un carter ( 7 ) extérieur chaud de rotor, qui est fixé sur des parties ( 5a, 5b ) axiales d'arbre de rotor et entoure un porte-enroulement ( 9 ) froid ayant un enroulement ( 10 ) supraconducteur,
et
b) a des moyens de maintien du porte-enroulement ( 9 ) dans le carter ( 7 ) extérieur du rotor, qui sont conçus d'un côté ( A5 ) du rotor ( 5 ) pour la transmission d'un couple de rotation entre le support d'enroulement ( 9 ) et la partie ( 5a ) d'arbre du rotor associé
ainsi que
• comprenant des moyens de refroidissement et d'isolation thermique de l'enroulement ( 10 ) supraconducteur,
**caractérisée en ce que** les moyens de maintien sont formés à l'intérieur du carter ( 7 ) extérieur du rotor du côté ( AS ) de transmission du couple de rotation du rotor ( 5 ), sous la forme d'un dispositif ( 8 ) de fixation, d'un côté et s'étendant dans la direction axiale, du support ( 9 ) d'enroulement.

2. Machine suivant la revendication 1, **caractérisée en ce que** le dispositif ( 8 ) de fixation s'étendant axialement est sous la forme d'un cylindre tubulaire.

3. Machine suivant la revendication 1 ou 2, **caractérisée en ce que** le dispositif ( 8 ) de fixation s'étendant axialement comprend plusieurs éléments entourant, de préférence concentriquement, l'axe ( A ) du rotor.

4. Machine suivant l'une des revendications précédentes, **caractérisée en ce qu'**au moins une partie du dispositif ( 8 ) de fixation s'étendant axialement est en une matière plastique renforcée par des fibres.

5. Machine suivant l'une des revendications précédentes, **caractérisée en ce que** les conducteurs de l'enroulement ( 10 ) supraconducteur contiennent du matériau supraconducteur métallique à T_{c} basse ou du matériau supraconducteur en oxyde métallique à T_{c} haute.

6. Machine suivant l'une des revendications précédentes, **caractérisée en ce qu'**au moins entre le carter (7) extérieur du rotor et le support de l'enroulement (9), il y a un espace (V) sous vide.

7. Machine suivant l'une des revendications précédentes, **caractérisée par** un agencement à orientation verticale de l'axe (A) de rotation du rotor (5).
